Europäisches Patentamt

European Patent Office

Office européen des brevets

(11) Numéro de publication: **0 306 584**

**A1**

## (12) DEMANDE DE BREVET EUROPEEN

(21) Numéro de dépôt: 87440054.2

(22) Date de dépôt: **11.09.87**

(51) Int. Cl.⁴: **B62D 31/02 , B61D 17/04**

(43) Date de publication de la demande:
**15.03.89 Bulletin 89/11**

(84) Etats contractants désignés:
**AT BE CH DE ES GB GR IT LI LU NL SE**

(71) Demandeur: **SARL TECHNOFORME**
**26 route Nationale**
**F-59235 Bersee (Nord)(FR)**

(72) Inventeur: **Savey, Claude**
**21 rue du Pavé**
**F-59235 Bersee Nord(FR)**

(74) Mandataire: **Lepage, Jean-Pierre**
**Cabinet Lepage & Aubertin Innovations et**
**Prestations 23/25, rue Nicolas Leblanc B.P.**
**1069**
**F-59011 Lille Cédex 1 (Nord)(FR)**

(54) **Caisse de véhicules ferroviaires ou routiers.**

(57) L'invention est relative à une caisse de véhicules ferroviaires ou routiers, notamment destinée à équiper des véhicules de transport et commun. Elle sera notamment appliquée à la construction de tels véhicules.

Selon l'invention, la caisse (1) comporte une poutre de structure (9) présentant :
- une âme centrale (10) dont la hauteur correspond sensiblement à la hauteur des parois latérales (4, 5),
- une semelle supérieure (11) formant au moins une partie de la toiture (3),
- une semelle inférieure (12) formant au moins une partie du châssis-plancher (2).

En outre, la dite poutre (9) est disposée longitudinalement parallèlement à la direction de déplacement (13) du véhicule, dans la zone centrale de la dite caisse (1) et constitue l'élément porteur de la caisse (1).

De plus, la caisse comporte des éléments d'habillage (14 à 17), faiblement porteurs, reliant la toiture (3) et le châssis-plancher au niveau de la semelle supérieure (11) et inférieure (12) de la dite poutre de structure (9):

FIG.1

L'invention est relative à une caisse de véhicules ferroviaires ou routiers, notamment, destinée à équiper des véhicules de transport en commun. Elle trouvera notamment son application dans le domaine de la construction de tels véhicules.

Actuellement, les caisses de véhicules ferroviaires ou routiers sont traditionnellement construites à partir d'une structure porteuse métallique en forme de tube comportant essentiellement un châssis, une toiture et des parois latérales présentant des ouvertures telles que portes ou fenêtres.

Généralement, les caisses traditionnelles sont constituées par un châssis métallique qui supporte le plancher et qui représente l'essentiel de la partie résistante de la caisse du véhicule. En effet, la toiture, reliée au plancher par les parois latérales largement évidées, ne coopère que très peu à la rigidité de la caisse.

De plus, le tube formant la caisse n'est pas réalisé d'un seul tenant mais plutôt par un assemblage mécano-soudé du châssis, de la toiture et des parois latérales qui alors transmettent les efforts du châssis vers la toiture. Par ailleurs, cet assemblage n'est pas sans poser quelques problèmes de résistance locale de certains éléments.

Un premier principe de réalisation aurait été de fabriquer la caisse à partir d'un tube moulé d'un seul tenant en matériau composite stratifié. Ainsi, on aurait en une continuité au niveau de la structure ce qui aurait pour but de diminuer les concentrations de contrainte dans les parois latérales.

Toutefois, une telle réalisation comporte de nombreux inconvénients à savoir investissement en outillage très important, aucune souplesse pour la mise au point, élément mono-coque nécessitant un procédé de réparation autre que le changement d'une pièce, moulage très complexe pour intégrer des équipements auxiliaires tels que sièges, éclairage, publicité.

Une autre préoccupation dans le domaine des caisses de véhicules est la résistance à la corrosion. C'est ce problème qui a amené en particulier la réalisation de caisses en acier inoxydable ou encore en alliage léger d'aluminium.

Or, du fait de l'évolution technologique dans le domaine des matériaux composites stratifiés qui présentent les avantages d'une excellente résistance à la corrosion et d'une facilité d'intégration, par moulage, d'éléments ou de fonctions jusqu'ici rapportés, il serait intéressant d'employer ces matériaux pour réaliser une caisse de véhicules de transport en commun.

Néanmoins, le comportement de ces matériaux est particulier et certaines caractéristiques mécaniques comme principalement le module d'élasticité sont inférieures à celles des métaux. Ces considérations rendent encore plus pénalisantes la faible participation mécanique de la toiture.

De ce fait, si on réalise selon les conceptions traditionnelles la caisse ainsi que les parois latérales en matériau composite, on affaiblira la rigidité à la flexion de la caisse et on s'exposera à une impossibilité d'exploitation du fait de l'importance de la flèche.

Par ailleurs, selon les lois de la résistance des matériaux, pour améliorer la rigidité à la flexion d'un tube-poutre, il est intéressant de faire augmenter sa hauteur car son moment d'inertie est proportionnel au carré de cette hauteur. De plus, il y a bonne coopération de la semelle inférieure et de la semelle supérieure du tube, autrement dit du toit et du plancher de la caisse, s'il y a une liaison efficace et rigide entre ces deux éléments.

Le but de la présente invention est de proposer une caisse de véhicules ferroviaires ou routiers, notamment destinée à équiper des véhicules de transport en commun, qui présentent une excellente rigidité à la flexion et résistance à la corrosion tout en ayant des parois latérales faiblement porteuses n'ayant pratiquement que pour fonction l'habillage de la caisse et palliant ainsi aux différents inconvénients précités.

En effet, la réalisation de la présente invention remet en cause la conception traditionnelle des véhicules afin de bénéficier de certains avantages notamment d'une meilleure utilisation des composants au niveau structurel pour bénéficier de toute l'inertie de la coque sur le plan rigidité en flexion.

D'autres avantages sont inhérents à la réalisation de la présente invention telle que l'intégration au niveau structurel des fonctions complémentaires, notamment des sièges, des gaines et canalisations, des éclairages, l'utilisation de l'espace sous les sièges pour les équipements techniques, la réalisation de parois latérales ouvertes légères et facilement interchangeables permettant différentes personnalisations du véhicule tout en ayant une structure unique.

Un des buts de la présente invention est de proposer une caisse de véhicules ferroviaires ou routiers comprenant essentiellement un châssis intégrant le plancher, une toiture et des parois latérales présentant des ouvertures telles que portes ou fenêtres, qui soit organisée autour d'une poutre centrale ayant pour semelles le châssis-plancher et le toit et pour âme des cloisons internes où seraient intégrés les sièges, les gaines, les canalisations et l'éclairage.

Un autre but de la présente invention est de proposer une caisse de véhicules ferroviaires ou routiers qui puisse être réalisée par moulage d'un matériau composite stratifié présentant une bonne résistance à la corrosion, bénéficiant des avantages du moulage tels que les intégrations des sièges, gaines ou éclairage, tout en présentant une bonne rigidité du fait de la structure réalisée.

Un autre but de la présente invention est de proposer une caisse de véhicules ferroviaires ou routiers dont le montage des parois et des portes ainsi que des équipements techniques soit facilité tout en permettant un entretien et une réparation aisée de ces différents éléments.

D'autres buts et avantages de la présente invention apparaitront au cours de la description qui va suivre qui n'est cependant donnée qu'à titre indicatif et qui n'a pas pour but de la limiter.

Selon la présente invention, la caisse de véhicules ferroviaires ou routiers, notamment destinée à équiper des véhicules de transport en commun, comprenant essentiellement un châssis-plancher, une toiture et des parois latérales présentant des ouvertures telles que portes ou fenêtres, est caractérisée par le fait qu'elle comporte:
- une poutre de structure présentant : une âme centrale dont la hauteur correspond sensiblement à la hauteur des parois latérales, une semelle supérieure formant au moins une partie de la toiture, et une semelle inférieure formant au moins une partie du châssis-plancher, la dite poutre étant disposée longitudinalement, parallèlement à la direction de déplacement du véhicule, dans la zone centrale de la dite caisse et constituant l'élément porteur de la caisse,
- des éléments d'habillage, faiblement porteurs, reliant la toiture et le châssis-plancher au niveau de la semelle supérieure et inférieure de la dite poutre de structure.

La présente invention sera mieux comprise à la lecture de la description suivante accompagnée des figures en annexe qui en font partie intégrante.

La figure 1 montre une vue éclatée en perspective d'un mode de réalisation de la caisse d'un véhicule ferroviaire ou routier de la présente invention.

La figure 2 montre une couple longitudinale de la caisse de véhicules représentée selon la figure 1.

La figure 3 représente une vue de coupe selon l'axe III-III de la figure 2.

La figure 4 représente une vue en coupe selon l'axe IV-IV de la figure 2.

La figure 5 représente une vue en coupe selon l'axe V-V de la figure 2.

La figure 6 représente une vue en coupe partielle selon l'axe III-III de la figure 2 montrant un détail selon un autre mode de réalisation.

La figure 7 représente une coupe longitudinale de la caisse d'un véhicule ferroviaire équipée selon un mode de réalisation de la présente invention.

La figure 8 représente une vue en coupe selon l'axe VIII-VIII de la figure 7.

La figure 9 représente une vue de dessus de l'agencement intérieur de la caisse du véhicule ferroviaire représentée à la figure 7.

La figure 10 montre une vue en coupe de face d'un autre mode d'équipement de la caisse du véhicule ferroviaire selon la présente invention.

La figure 11 montre une vue en coupe selon l'axe XI-XI de la figure 10.

La figure 12 représente une vue de dessus montrant l'agencement intérieur de la caisse du véhicule représentée à la figure 10.

La présente invention vise donc une caisse de véhicules ferroviaires ou routiers, notamment destinée à équiper des véhicules de transport en commun, dont les parois latérales présentent de larges et nombreuses ouvertures telles que des portes ou fenêtres.

De par la présence de ces ouvertures dans les parois latérales, les caisses de formes traditionnelles tubulaires présentent une mauvaise rigidité en flexion qui vient du fait que malgré sa forme tubulaire, il y a une mauvaise transmission des efforts entre plancher et plafond par les très petits montants formés entre les portes et fenêtres des parois latérales.

Pour augmenter la rigidité de la caisse et pour transmettre certains efforts au niveau de la toiture, la réalisation de la présente invention remet en cause la conception traditionnelle des véhicules en organisant la caisse autour d'une poutre centrale qui servira de structure à la caisse.

De plus, pour bénéficier de certains avantages des matériaux composites stratifiés moulables, tels que bonne résistance à la corrosion, facilité d'intégrer par moulage différentes fonctions annexes à la structure porteuse, la réalisation structurelle de la caisse de véhicules selon la présente invention permettra l'utilisation de tels matériaux composites.

Néanmoins, il pourrait être envisagé de réaliser des caisses de véhicules ferroviaires ou routiers selon l'invention dans d'autres matériaux tels que notamment en utilisant des éléments métalliques, par exemple en alliage léger ou en acier inoxydable.

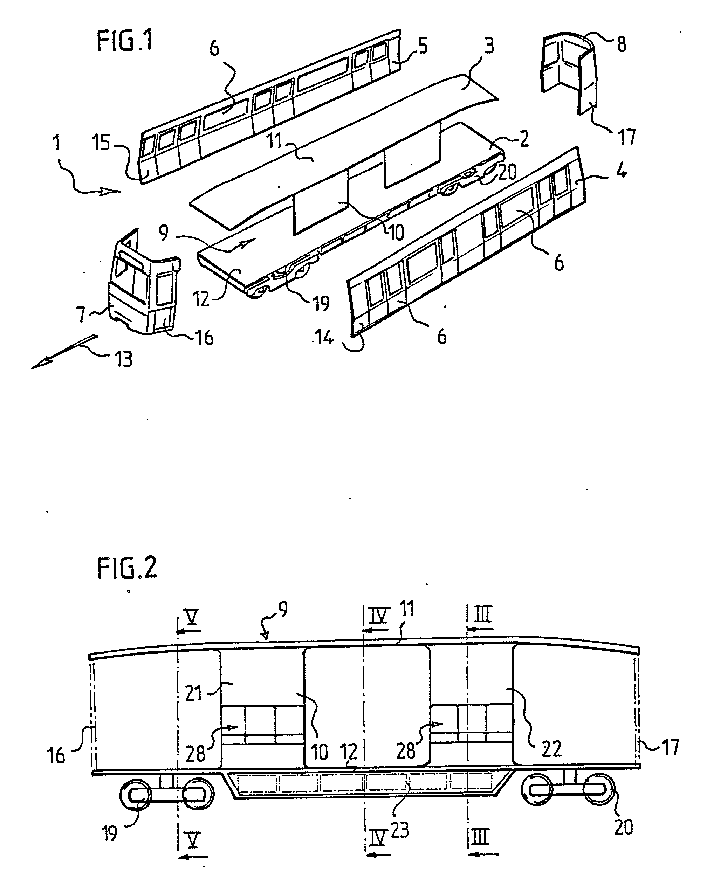

Comme le montre la figure 1, la caisse 1 du véhicule comprend essentiellement un châssis-plancher 2, une toiture 3, et des parois latérales 4 et 5 présentant des ouvertures 6 telles que portes ou fenêtres. De plus, elle présente une face avant 7 et arrière 8 comportant de larges ouvertures pour autoriser notamment le pilotage par le conducteur du véhicule.

Selon la présente invention, la caisse 1 de véhicule comporte une poutre de structure 9 présentant :
- une âme centrale 10 dont la hauteur correspond sensiblement à la hauteur des parois latérales 4 et 5,

- une semelle supérieure 11 formant au moins une partie de la toiture 3,
- une semelle inférieure 12 formant au moins une partie du châssis-plancher 2.

De plus, la poutre de structure 9 est disposée longitudinalement, parallèlement à la direction de déplacement du véhicule, repérée par les flèches 13 sur la figure 1, dans la zone centrale de la dite caisse 1, comme le montre cette figure.

Selon l'invention, la poutre de structure 9 constitue l'élément porteur de la caisse 1 alors que les parois latérales 4,5 et 7,8 sont constituées par des éléments d'habillage 14 à 17, reliant la toiture 3 et le châssis-plancher 2 au niveau de la semelle supérieure 11 et inférieure 12, qui sont faiblement porteurs.

Par ailleurs, pour faciliter l'aménagement intérieur du véhicule et autoriser une circulation intérieure des voyageurs, tout en gardant sa rigidité, l'âme 10 de la poutre de structure centrale 9 sera avantageusement ajourée.

Sur cette base, plusieurs configurations de caisses sont possibles, un exemple non limitatif est montré à la figure 1.

En outre, l'âme centrale 10 ajourée pourrait être constituée de profils de liaison de directions différentes. Plus particulièrement selon une direction orthogonale par rapport aux semelles pour créer une "poutre échelle" ou encore selon des directions inclinées pour former alors une "poutre treillis".

A la figure 1, la poutre de structure centrale constitue l'intégralité du châssis-plancher 2 et de la toiture 3. De plus, la semelle inférieure 12 constituant le châssis-plancher forme également le châssis du véhicule qui reposera directement sur les boggies 19 et 20 sans l'intermédiaire de châssis traditionnels.

De plus, dans ce cas, les panneaux d'habillage 14 à 17 sont de forme simple et sont prévus de telle manière qu'il n'y ait pas de joint d'étanchéité au niveau supérieur de la toiture 3.

Dans un premier mode de réalisation de l'invention, la poutre de structure centrale 9 se présentera sous la forme d'un assemblage d'éléments métalliques, notamment en acier inoxydable ou en alliage léger par exemple mécano-soudés. De même, les éléments d'habillage pourront être constitués dans des matériaux de compositions voisines.

Par contre, avantageusement et selon un mode préférentiel de la présente invention, la poutre de structure centrale 9 sera formée par un matériau composite stratifié moulé qui se présentera sous la forme d'un sandwich comportant un matériau central allégé compris entre deux peaux travaillantes.

Selon différents modes de réalisation, les peaux travaillantes seront constituées soit par un matériau métallique tel que par exemple de l'aluminium ou de l'acier inoxydable, soit par un matériau plastique et/ou thermoplastique, ou encore par un matériau composite à base de résine notamment phénolique enrobant des renforts tels que notamment des fibres.

En ce qui concerne le matériau central allégé, il peut notamment être constitué par des mousses syntactiques de polystyrène et de mousse phénolique.

En outre, les éléments d'habillage étant faiblement porteurs, il pourront être avantageusement et également réalisés dans un matériau composite stratifié du même type voire même de résistance moindre.

A cet égard, il est connu de l'Homme de l'Art des techniques de moulage et des procédés de fabrication de panneaux en résine phénolique ou similaires.

Toutefois, la poutre 9 de matériau composite moulé présente avantageusement selon l'invention un sandwich de plusieurs couches formées par :
- une première couche de parement "gelcoat" d'épaisseur de l'ordre de 0,3 à 0,6 mm,
- une première couche de résine, notamment phénolique, et de fibre de verre et/ou de carbone et/ou polyamide, de résistance mécanique variable selon les zones de contriante de la poutre 9, de l'ordre de 3 à 6 mm d'épaisseur,
- une âme en mousse syntactique de polystyrène et de mousse phénolique de dimensions variables pouvant aller de 5 à 300 mm,
- une deuxième couche de résine notamment phénolique, et de fibre de verre et/ou de carbone et/ou de polyamide de résistance mécanique variable selon les zones de contrainte de la poutre et sensiblement symétrique à la dite première couche de résine ainsi que de dimensions voisines,
- une deuxième couche de parement "gelcoat" de 0,3 à 0,6 mm d'épaisseur.

Il est à remarquer que cette poutre sera fabriquée par moulage dans des moules prévus à cet effet, la couche de gelcoat facilitant le démoulage de permettant en outre de donner une ou des colorations à la poutre.

Toutefois, d'autres compositions de "sandwich" à la portée de l'Homme de l'Art, pourraient être envisagées sans pour autant sortir du cadre de la présente invention.

Les figures 2 à 5 montrent les détails de structure d'une poutre centrale 9 pouvant constituer la base de la caisse 1 telle que représentée à la figure 1.

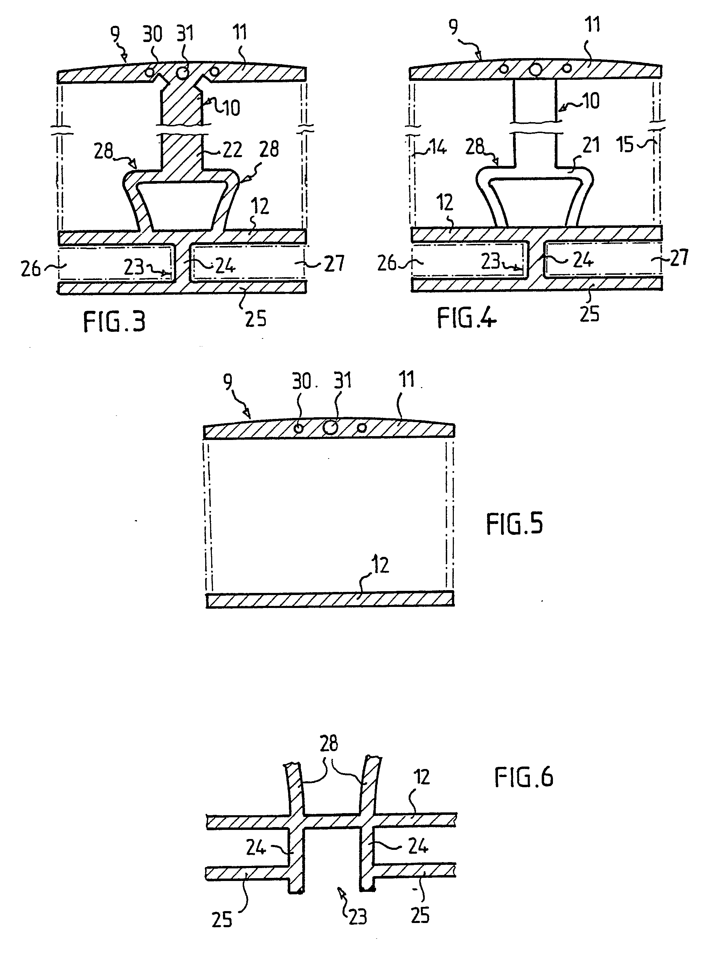

La figure 2 montre une coupe longitudinale de la caisse 1 organisée autour de la poutre de structure centrale 9 réalisée en matériau composite stratifié moulé tel qu'il vient d'être décrit. Les figures 3, 4 et 5 montrent respectivement les profils 2 selon les axes III, IV, V.

En effet, la poutre de structure 9, portée par deux boggies 19 et 20, l'un avant, l'autre arrière, comportent : une semelle supérieure 11 sensiblement horizontale, une semelle inférieure 12 également sensiblement horizontale, ainsi qu'une âme centrale 10 ajourée, sensiblement verticale réunissant selon leurs axes médians, les semelles supérieure 11 et inférieure 12, et présentant au moins deux membrures opaques 21, 22, disposées dans la zone de la caisse 1 comprise entre les deux boggies 19 et 20.

Par ailleurs, selon la présente invention, pour augmenter la résistance à la flexion de la poutre de structure 9 à âme centrale ajourée, celle-ci présente au moins une nervure de renfort inférieure 23, placée sous la semelle inférieure 12 longitudinalement dans sa zone centrale et sensiblement dans le plan de l'âme centrale 10 de la poutre 9.

Plus précisément, comme le montrent les figures 2 à 4, la nervure de renfort inférieure 23 est au moins disposée dans la zone de la caisse 1 comprise entre les deux boggies 19 et 20 et est placée sous la semelle inférieure 12 longitudinalement selon son axe médian.

Selon la réalisation montrée à ces figures, la nervure de renfort 23 est formée par une membrure verticale 24 solidaire de la semelle inférieure, longitudinalement selon son axe médian, et par une aile de renfort horizontale 25 placée à la partie basse de la dite membrure verticale 24.

En outre, cette disposition est avantageuse car elle permettra de prévoir deux logements 26 et 27 dans lesquels seront placés, par exemple dans des racks coulissants contenant notamment les équipements électriques nécessaires à la traction du véhicule.

Il est à noter que cette nervure de renfort inférieure 23 est au moins disposée entre les deux boggies 19 et 20 car c'est là que réside le maximum des efforts de flexion de la caisse 1.

Par ailleurs, la figure 6 montre un autre mode de réalisation du renfort inférieur qui est substantiellement alors constitué par deux nervures 23, chacune d'elles étant formée par une membrure verticale 24 solidaire de la semelle inférieure 12 longitudinalement selon une zone centrale définie par son axe médian, et par une aile de renfort horizontale 25 placée à la partie basse de la membrure 24 comme le montre précisément cette figure.

Dans le cas d'une poutre de structure 9 réalisée en matériau composite moulé, on peut bénéficier des avantages du moulage pour intégrer des équipements annexes tels que sièges, éclairage, canalisations, emplacements publicitaires ou autres.

En effet, comme le montre le mode de réalisation des figures 2 à 4, la poutre de structure 9 inclut des sièges 28 moulés simultanément avec la poutre 9 et faisant partie intégrante de la dite poutre. De plus, elle inclut également des réservations 29, 30 et 31 permettant de faciliter le montage ultérieur d'accessoires tels que respectivement des plafonniers d'éclairage, des canalisations électriques, des canalisations de chauffage ou de climatisation.

En outre, de par la présence des nervures de renfort 23, on pourra également inclure des réservations 26, 27 servant de coffres pour l'appareillage électrique notamment.

Il est à noter que du fait des facilités de moulage de ces matériaux et des précisions obtenues lors du moulage, ces emplacements ne nécessiteront plus d'usinages ultérieurs et permettront directement l'installation des auxiliaires, ce qui avantageusement permettra de diminuer le coût de revient de l'équipement du véhicule.

Enfin, il est à noter que la réalisation, montrée aux figures 2 à 5, présente certains avantages au niveau de l'étanchéité de la caisse 1. En effet, la semelle supérieure 11 constitue la totalité de la toiture et, les parois d'habillage 14 à 17 sont placées sous cette dernière; la caisse 1 ne montrant pas ainsi de joints d'étanchéité au niveau de la toiture. De plus cette disposition facilite sensiblement la réalisation des dits panneaux d'habillage qui peuvent personnaliser le véhicule tout en gardant la même structure porteuse centrale.

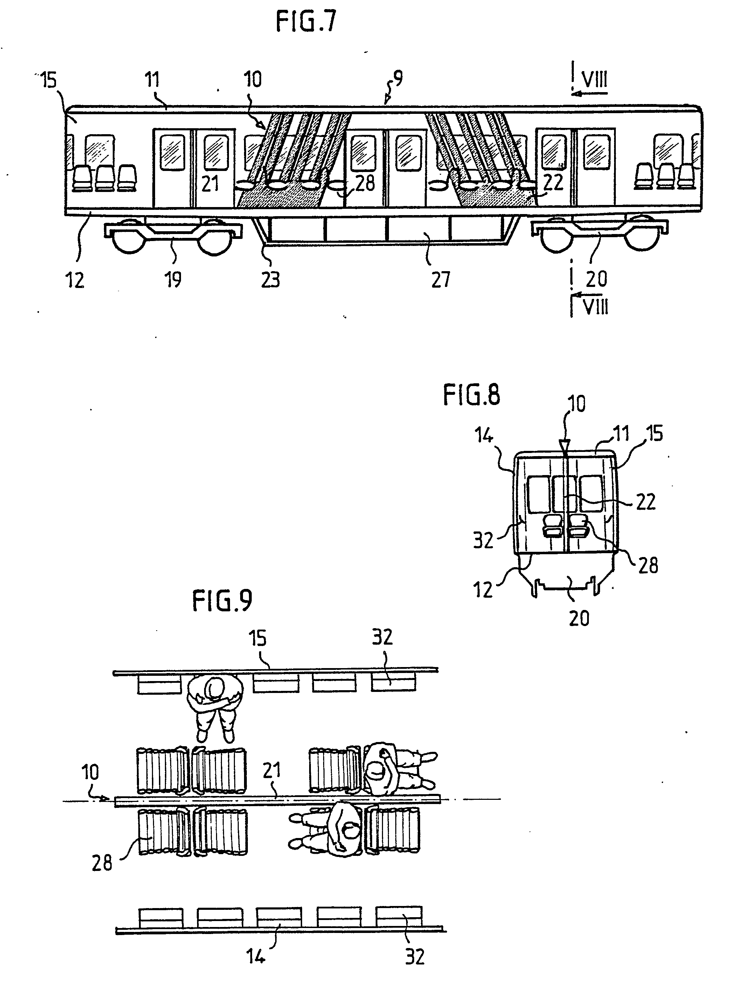

Toutefois, ces configurations ne sont nullement limitatives et d'autres configurations, sur les bases de structures décrites précédemment, plus esthétiques et plus ergonomiques, sont possibles et illustrées à titre d'exemple aux figures 7 à 9 et 10 à 12.

Aux figures 7 à 9, on remarque une configuration de caisse 1 très voisine de celle représentée à la figure 3, dans laquelle on retrouve la poutre de structure 9, formée par la semelle supérieure 11, la semelle inférieure 12, l'âme centrale 10 ajourée les reliant, et la ou les nervures de renfort inférieure 23 sous la semelle inférieure.

L'âme 10 est constituée par deux membrures 21 et 22 qui se présentent sous la forme de parois planes en forme de parallélogramme partiellement évidées. Toutefois les membrures 21 et 22 pourraient être constituées par des parois de formes géométriques quelconques évidées partiellement ou non.

Autour de chaque membrure 21 ou 22 sont disposés de moulage, les sièges 28. De plus, on pourra prévoir sur les panneaux d'habillage latéraux 14 et 15 d'autres sièges 32 qui seront avantageusement de type "ischiatique".

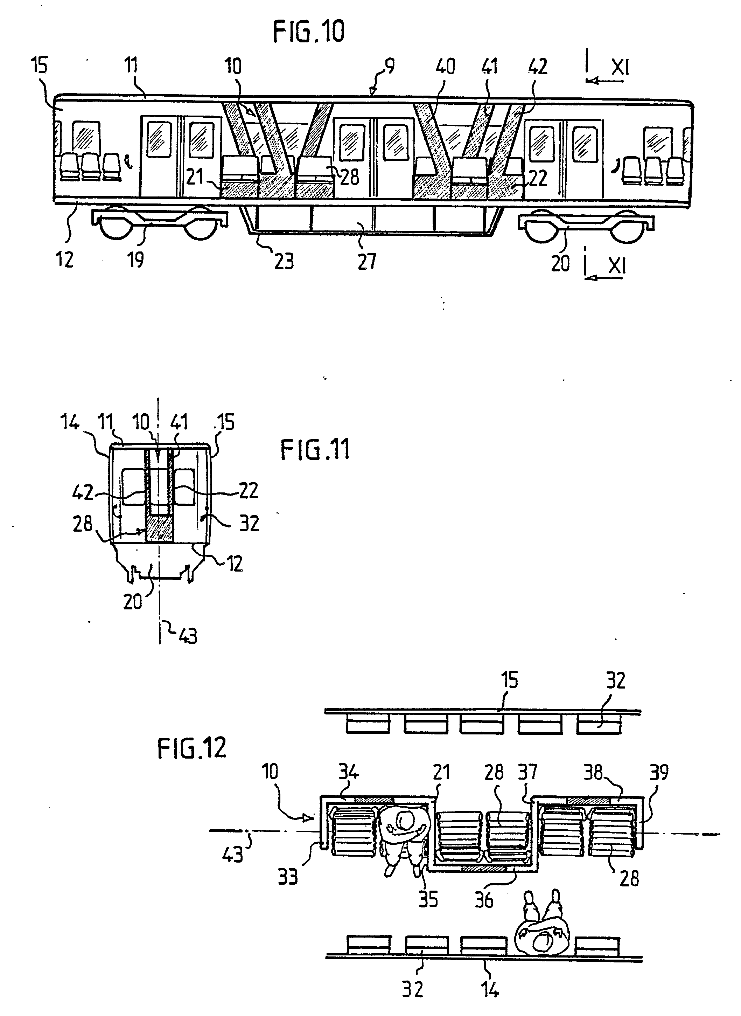

De même les figures 10 à 12 montrent une autre réalisation inspirée également de la réalisation montrée aux figures 2 et 3 mais dont les membrures 21 et 22 de l'âme centrale 10 de la poutre de structure 9 se présentent sous la forme d'un volume formant caisson constitué par un assemblage de plusieurs parois planes de formes géométriques quelconques évidées partiellement ou non.

Plus précisément, comme le montrent les figures, chaque membrure 21-22 est formée par un assemblage de parois basses 33 à 38 disposées sensiblement en zig-zag ou en créneaux et formant des petites cavités à l'intérieur desquelles sont placés les sièges 28. De la partie supérieure des parois 33 à 38 s'élèvent vers la semelle supérieure d'autres parois planes de formes géométriques quelconques 40 à 42 décalées les unes des autres par rapport à l'axe central schématisé en 43 de la caisse.

Naturellement, d'autres mises en oeuvre, et plus précisément d'autres configurations de l'âme de la poutre centrale, à la portée de l'Homme de l'Art, pourraient être envisagées sans pour autant sortir du cadre de la présente invention.

**Revendications**

1. Caisse de véhicules ferroviaires ou routiers, notamment destinée à équiper des véhicules de transport en commun, comprenant essentiellement un châssis-plancher (2), une toiture (3) et des parois latérales (4) et (5) présentant des ouvertures (6) telles que portes ou fenêtres, caractérisée par le fait qu'elle comporte :
- une poutre de structure (9) présentant :
- une âme centrale (10) dont la hauteur correspond sensiblement à la hauteur des parois latérales (4) et (5),
- une semelle supérieure (11) formant au moins une partie de la toiture (3),
- une semelle inférieure (12) formant une partie du châssis-plancher (2),
la dite poutre (9) étant disposée longitudinalement, parallèlement à la direction de déplacement (13) du véhicule, dans la zone centrale de la dite caisse (1) et constituant l'élément porteur de la caisse,
- des éléments d'habillage (14) à (17), faiblement porteurs, reliant la toiture (3) et le plancher (2) au niveau de la semelle supérieure (11) et inférieure (12) de la dite poutre de structure (9).

2. Caisse de véhicules ferroviaires ou routiers selon la revendication 1, caractérisée par le fait que l'âme (10) de la poutre de structure centrale (9) est ajourée.

3. Caisse de véhicules ferroviaires ou routiers selon la revendication 2, caractérisée par le fait que l'âme (10) de la poutre de structure centrale (9) ajourée peut être constituée de profils de liaison de directions différentes.

4. Caisse de véhicules ferroviaires ou routiers selon la revendication 1, caractérisée par le fait que la poutre de structure centrale (9) se présente sous la forme d'un sandwich comportant un matériau central allégé compris entre deux peaux travaillantes.

5. Caisse de véhicules ferroviaires ou routiers selon la revendication 4, caractérisée par le fait que les peaux travaillantes sont constituées soit par un matériau métallique soit par un matériau thermoplastique ou encore par un matériau composite à base de résine renforcée de fibres.

6. Caisse de véhicules ferroviaires ou routiers selon la revendication 4, caractérisée par le fait que la poutre de structure centrale (9) se présente sous la forme d'un matériau composite stratifié moulé constitué :
- une première couche de parement "gelcoat",
- une première couche de résine et de fibres de verre, et/ou de carbone et/ou de polyamide, de résistance mécanique variable selon les zones de contrainte de la poutre,
- une âme en mousse syntactique de polystyrène et de mousse phénolique,
- une deuxième couche de résine et de fibres de verre, et/ou de carbone et/ou de polyamide sensiblement symétrique à la dite première couche de résine,
- une deuxième couche de parement "gelcoat".

7. Caisse de véhicules ferroviaires ou routiers selon la revendication 1, caractérisée par le fait que la poutre de structure centrale (9) se présente sous la forme d'un assemblage d'éléments métalliques.

8. Caisse de véhicules ferroviaires ou routiers selon la revendication 2, caractérisée par le fait que la poutre de structure (9) à âme centrale ajourée présente au moins une nervure de renfort inférieure (23) placée sous la semelle inférieure (12) longitudinalement.

9. Caisse de véhicules ferroviaires ou routiers selon la revendication 5, caractérisée par le fait que la poutre de structure en matière composite moulée inclut des sièges (28) moulés simultanément avec la poutre (9) et faisant partie intégrante de la dite poutre ainsi que des réservations (29, 30 et 31) pour faciliter le montage ultérieur d'accessoires tels que plafonnier canalisation, chauffage, climatisation.

10. Caisse de véhicules ferroviaires ou routiers selon la revendication 8, caractérisée par le fait que la nervure de renfort inférieure (23) est prévue telle qu'elle forme des réservations (26, 27) pour faciliter le montage ultérieur d'équipements tels que appareillage électrique.

11. Caisse de véhicules ferroviaires ou routiers, destinée à être portée par un boggie avant (19) et un boggie arrière (20), selon la revendication 5, caractérisée par le fait que la poutre de structure centrale (9) comporte :
- une semelle inférieure (11) sensiblement horizontale,
- une âme centrale (10) ajourée sensiblement verticale, réunissant selon leurs axes médians les semelles supérieure (11) et inférieure (12) et présentant au moins deux membrures (21) et (22) opaques disposées dans la zone de la caisse comprise entre les deux boggies (19) et (20),
- une nervure de renfort inférieure (23), au moins disposée dans la zone de la caisse (1) comprise entre les boggies (19) et (20), formée par au moins une membrure verticale (24) placée sous la semelle inférieure (12) longitudinalement à la poutre (9), et équipée d'au moins une aile de renfort horizontale (25) placée dans la partie basse de la dite membrure verticale (24), aile de renfort horizontale (25) placée à la partie basse de la dite membrure verticale (24).

12. Caisse de véhicules ferroviaires ou routiers selon la revendication 11, caractérisée par le fait que les membrures (21) et (22) de l'âme centrale (10) se présentent sous la forme d'une paroi plane de forme géométrique quelconque évidée partiellement ou non.

13. Caisse de véhicules ferroviaires ou routiers selon la revendication 11, caractérisée par le fait que les membrures (21) et (22) de l'âme centrale (10) se présentent sous la forme d'un volume formant caisson constitué par un assemblage de plusieurs parois (33 à 42) planes de formes géométriques quelconques évidées partiellement ou non.

FIG.1

FIG.2

FIG.3

FIG.4

FIG.5

FIG.6

FIG.7

FIG.8

FIG.9

# FIG.10

# FIG.11

# FIG.12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A- 647 370 (KRUCKENBERG et al.) <br> * En entier; en particulier page 1, ligne 53 - page 2, ligne 8; figure 2 * <br> --- | 1-3,11, 13 | B 62 D 31/02 <br> B 61 D 17/04 |
| X | DE-A- 638 377 (CHRISTOPH et al.) <br> * En entier; en particulier figures 1,2 * <br> --- | 1-3,11, 13 | |
| X | DE-A- 626 595 (CRISTOPH et al.) <br> * En entier; en particulier figure 7 * <br> --- | 1-3,11, 13 | |
| X <br> . | US-A-4 543 887 (BAKER) <br> * En entier; en particulier résumé; figures 5,6 * <br> --- | 1,3,11 | |
| X | FR-A-2 364 798 (SCHWEIZERISCHE LOK. UND MASCHINENFABRIK) <br> * Page 1, lignes 1-3, ligne 18 - page 2, line 15; figures 5,6 * <br> --- | 1-3,11 | |
| A | FR-A-1 475 508 (OFFICINE MECCANICHE FERROVIARIE PISTOIESI S.p.A.) <br> * En entier * <br> --- | 4 | **DOMAINES TECHNIQUES RECHERCHES (Int. Cl.4)** <br> B 61 D <br> B 62 D |
| A | GB-A- 798 228 (ATELIERS DE CONSTRUCTION DU NORD DE LA FRANCE) <br> * En entier * <br> --- | 4 | |
| A | FR-A-1 223 407 (BRISTOL AIRCRAFT) <br> * En entier * <br> --- | 4 | |
| A | MACHINE DESIGN, vol. 35, no. 16, 4 juillet 1963, page 92; "Steel, foam, and glass fiber makes frameless train" <br> ----- | 5 | |

Le présent rapport a été établi pour toutes les revendications

| Lieu de la recherche | Date d'achèvement de la recherche | Examinateur |
|---|---|---|
| LA HAYE | 27-04-1988 | SCHMAL R. |